# FASCICULE DE BREVET EUROPEEN

(11) **EP 1 959 804 B1**
(45) Date de publication et mention de la délivrance du brevet: **02.06.2010**
(21) Numéro de dépôt: 06841894.6
(22) Date de dépôt: 08.12.2006
(51) Int. Cl.: A47J 45/06

(54) **POIGNEE POUR ARTICLE CULINAIRE EMPILABLE ET ENSEMBLE DE TELS POIGNEES ET ARTICLES**
GRIFF FÜR STAPELBARES KÜCHENGERÄT UND SATZ DERARTIGER GRIFFE UND KÜCHENGERÄTE
HANDLE FOR STACKABLE ITEM OF KITCHEN EQUIPMENT AND SET OF SUCH HANDLES AND ITEMS OF EQUIPMENT

(30) Priorité: 16.12.2005 FR 0512861
(43) Date de publication de la demande: 27.08.2008
(73) Titulaire: SEB SA, 69130 Ecully (FR)
(72) Inventeur: CUILLERY, Pascal, F-74210 Faverges (FR); PLICHON, Stéphane, F-74000 Annecy (FR); MAGNOULOUX, Guy, F-74370 Pringy (FR); BRASSET, Jean-Francois, F-74000 Annecy (FR)
(74) Mandataire: Pichat, Thierry
(86) Numéro de dépôt international: PCT/FR2006/002689
(87) Numéro de publication internationale: WO 2007/080252

(56) Documents cités:
- FR-A- 1 301 322
- GB-A- 2 439 271
- US-A- 5 957 038

## Description

Il s'agit ici d'améliorer les conditions d'empilement d'articles culinaires de cuisson, pour cuisinière et plaque de cuisson et la réalisation de poignées adaptées à cette situation est également concernée, article culinaire suivant un mouvement d'empilement.

Est aussi ici concerné un ensemble comprenant plusieurs (au moins deux) tels articles culinaires, identiques ou différents, parmi de préférence des casserole(s), poêle(s) et fait-tout(s), empilés et au moins pour certains conformes aux caractéristiques de l'article culinaire en cause.

On connaît des articles culinaires empilables avec un autre article culinaire, chaque article comprenant une calotte, pour y recevoir en particulier des aliments, et au moins une poignée, pour une préhension à main nue, cette poignée présentant au moins un pion et/ou au moins un logement étant défini, au moins à partie, par une zone en creux de ladite poignée, ceci pour le maintien en pile de l'article supérieur superposé à un autre article, le logement et/ou le pion étant pour cela adapté(s) respectivement, à recevoir un autre pion et/ou à être reçu dans un autre logement complémentaire(s) à celui/ceux précité(s) et prévu(s) sur la poignée.cet autre article.

Un ensemble d'articles culinaires empilables est présenté p.ex. dans le document GB 2439271.

Dans une application spécifique préférée, l'invention concerne donc un set de poêles ou de casseroles/faitouts qui, grossièrement, s'empile sensiblement verticalement, avec une position individuelle sensiblement horizontale, en emboîtant les poignées.

Dans le cadre du problème d'empilement ici posé, on souhaite préférentiellement que l'empilement de deux articles de diamètres non consécutifs reste possible, cette configuration correspondant au cas où un article de milieu de pile est empilé sur un article de bas de pile, par exemple.

On souhaite également, si possible, pouvoir non seulement stabiliser horizontalement, ou suivant une situation proche de l'horizontale, la pile dressée d'articles, ou de poignées empilables, mais également stabiliser les articles en pile autour d'un axe vertical ou sensiblement vertical, de manière à éviter que l'article supérieur tourne vis-à-vis de l'article inférieur.

On vise aussi de préférence à stabiliser l'inclinaison latérale, ou l'orientation angulaire autour de l'axe vertical d'empilement, des articles, les uns par rapport aux autres.

De façon générale, est donc ici recherchée une solution favorisant un empilement dressé stable, équilibré, avec des moyens aisés à mettre en oeuvre, d'un coût maîtrisé, faciles à fabriquer, aisés à intégrer sur une poignée et/ou un article culinaire existant et mécaniquement performant en tant qu'effet produit, si possible, dans l'orientation des poignées et/ou articles de la pile suivant différents plans (horizontal, vertical.....), avec en outre un effet de verrouillage libérable aussi pratique, performant, peu onéreux et ergonomique que possible.

On notera par ailleurs, dès à présent, qu'on entend par article culinaire « de cuisson », un article prévu particulièrement pour passer au feu ou sur une surface de chauffage par dessous, hors four, en particulier sur une cuisinière ou une plaque de cuisson.

Pour satisfaire à tout ou partie de ces objectifs, on conseille que la poignée et/ou l'article culinaire auquel est elle destinée, chacun étant du type globalement défini ci-avant, soit tel/telle qu'il/elle comprenne en outre une excroissance de verrouillage et une zone de réception adaptées respectivement :
- à être engagée avec une autre zone de réception prévue sur la poignée destinée audit autre article,
- et à recevoir l'engagement d'une autre excroissance de verrouillage prévue sur cette poignée destinée à l'autre article.

Cet « inter-engagement » pourra consister dans des appuis respectifs, ceci en particulier lors du mouvement d'empilement des poignées qui comprendra un basculement, dans un sens, d'une poignée par rapport à l'autre.

Il pourra y avoir alors blocage relatif entre les poignées, par appui entre l'excroissance de verrouillage et la zone de réception de ces poignées, alors empilées l'une sur l'autre.

Ainsi, on pourra verrouiller simplement et efficacement entre eux deux poignées et typiquement deux articles empilés.

En particulier dans un premier mode de réalisation, on prévoit que, de préférence :
- l'une entre l'excroissance et la zone de réception est formée à l'endroit du pion, et/ou
- l'autre entre lesdites excroissance et zone de réception est formée à l'endroit ou à proximité immédiate du logement,

Un jeu limité existera favorablement entre le pion d'une dite poignée et le logement de l'autre poignée, lorsque le premier s'engage dans le second, après quoi il pourra s'y bloquer, lors dudit basculement, s'il y a coincement relatif entre l'excroissance et ladite zone de réception avec laquelle celle-ci est engagée.

On conseille par ailleurs que, préalablement au basculement, le mouvement d'empilement comprenne une translation, laquelle mène au rapprochement entre l'excroissance et la zone de réception correspondante.

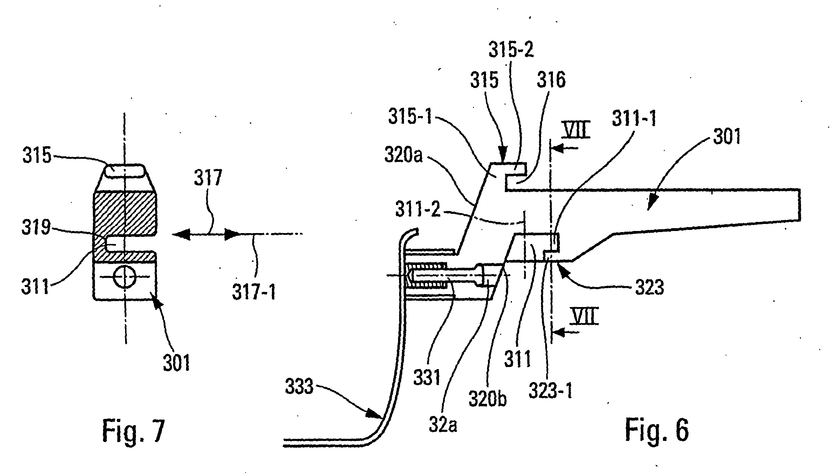

Typiquement, pour parvenir à cet effet, la translation s'effectuera sensiblement verticalement et le (léger) basculement de la poignée s'opèrera vers le bas et vers l'avant, de manière typiquement à faire basculer vers le bas la calotte de l'article culinaire supérieur alors disposée à l'intérieur de l'autre, sous-jacent et de plus grande section. On peut aussi prévoir un pivotement relatif dans un plan sensiblement horizontal (figures 6 et suivantes, ci-après).

Dans le premier cas, si le pion d'un article est engagé dans le logement de l'autre, il suffira de « lâcher » la poignée, le poids plus important de la calotte et la gravité faisant naturellement basculer cet article vers la position (réversible) précitée de coincement.

En liaison avec ce qui précède, on prévoit en outre, favorablement :
- que la poignée soit (adaptée à être) reliée à la calotte, à une première extrémité,
- et que le pion et le logement d'une même poignée soient situés plus près de cette première extrémité que de la seconde extrémité opposée de la poignée,
- et/ou que l'excroissance comprenne une zone inférieure de paroi de biais, extérieurement convexe vers le bas, et alors
- que la zone de réception, ici la paroi d'appui correspondante, présente une zone de paroi de biais, concave vers le haut et adaptée à recevoir étroitement ladite zone inférieure de paroi de la poignée du dessus.

On conseille aussi que :
- le mouvement d'engagement s'effectue dans un plan vertical ou sensiblement vertical,
- le pion et le logement soient dressés vis-à-vis de la poignée correspondante,
- l'excroissance soit formée, localement, le long d'une paroi dressée dudit pion,
- la zone de réception correspondante soit formée à l'endroit d'un orifice transversal à la direction suivant laquelle se dresse le pion ou le logement et avec lequel ce logement communique.

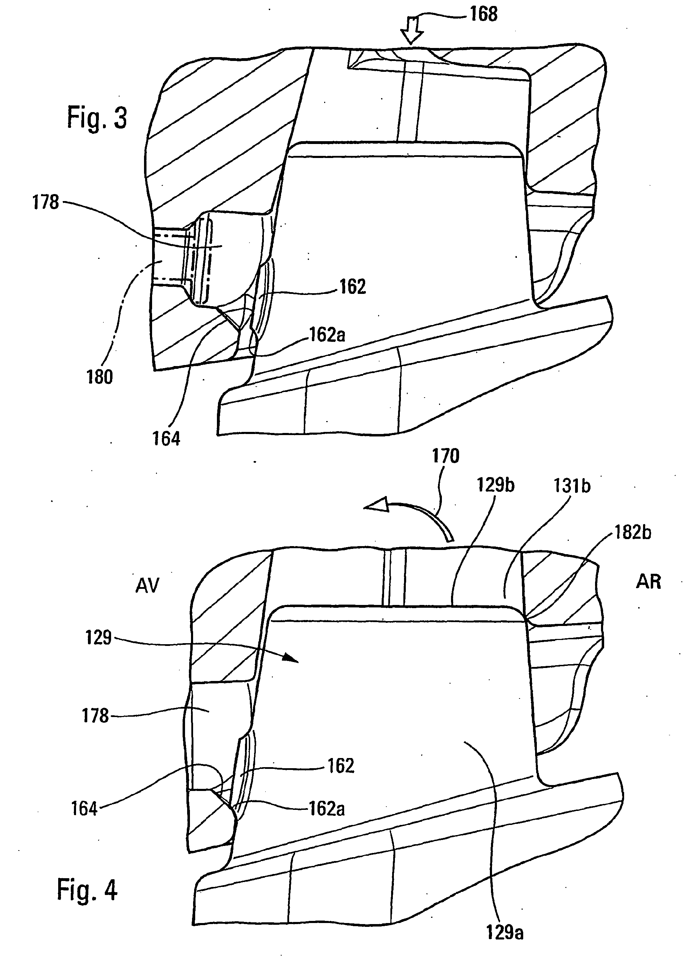

Comme montré ci-après figure 3, l'orifice transversal précité pourra recevoir une vis de fixation de la poignée à la calotte.

Globalement, les caractéristiques qui précèdent faciliteront la réalisation de la poignée et permettront de tirer avantage de l'existence de l'orifice transversal, utile par ailleurs.

Dans le même esprit, on conseille:
- que lors du mouvement d'empilement, le pion parvienne au moins essentiellement jusqu'en face de l'orifice transversal correspondant et y demeure, à l'issue du basculement,
- et/ou que la zone de réception soit formée en bordure du logement où celui-ci communique avec ledit orifice transversal.

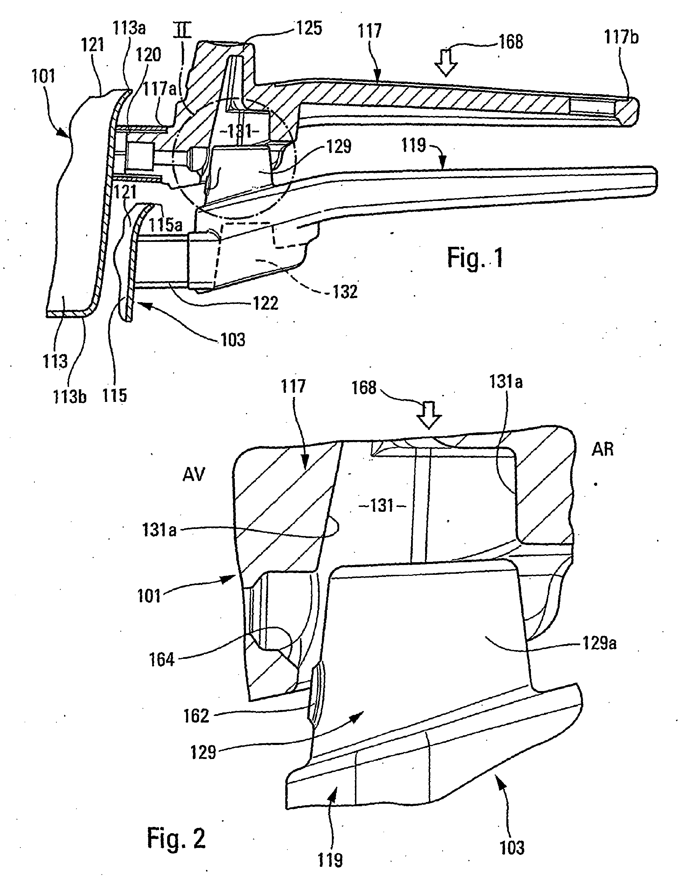

Pour favoriser une tendance naturelle au coincement de l'excroissance contre sa zone de réception (ici une paroi d'appui) en position empilée des articles, on conseille en outre que la poignée soit reliable/reliée à la calotte à une première extrémité, et que le pion et le logement d'une même poignée soient situés plus près de cette première extrémité que de la seconde extrémité opposée de la poignée (cas des figures 1 à 5 ci-après).

En liaison avec ce qui précède, on prévoira alors de préférence (figures 1 à 3) que :
- l'excroissance comprenne une zone inférieure de paroi de biais, extérieurement convexe vers le bas, et
- la paroi d'appui correspondante présente une zone de paroi de biais, concave vers le haut et adaptée à recevoir étroitement ladite zone inférieure de paroi de l'article considéré.

Dans une variante de réalisation, on a par ailleurs prévu que la zone de réception soit située derrière une ouverture ménagée dans la poignée correspondante, cette ouverture étant adaptée à laisser passer l'excroissance à travers elle, ce passage de l'excroissance intervenant pendant le mouvement d'empilement.

La zone de réception et l'excroissance pourront être situées à distance du pion et du logement.

Le mouvement d'empilement comprendra favorablement le passage de l'excroissance à travers l'ouverture correspondante, lequel, avec le basculement, amènera l'engagement du pion dans son logement, et l'engagement de l'excroissance avec sa zone de réception.

Il a en outre été de préférence prévu:
- que le pion et le logement soient situés plus près de la calotte que ne le sont l'excroissance et ladite ouverture,
- et que l'excroissance se présente comme un crochet saillant en surface de la poignée.

Favorablement :
- l'ouverture sera formée, ou débouchera, dans une paroi de dessus ou de dessous de cette poignée,
- et l'excroissance se présentera comme un crochet en saillie au-dessus ou en-dessous de ladite poignée.

On peut aussi prévoir une situation à double crochet coopérants, l'un saillant sur le dessus, l'autre sur le dessous, de la/chaque poignée.

Dans ce qui suit, une description encore plus détaillée est fournie, en liaison avec les dessins annexés donnés uniquement à titre d'exemples non limitatifs et dans lesquels :
- la figure 1 montre une vue en coupe diamétrale de deux parties de casseroles conforme aux solutions ici présentées, suivant un plan vertical passant par l'axe d'allongement des poignées, ou manches, de chacune de ces casseroles empilées, selon un premier mode de réalisation,
- la figure 2 présente une vue agrandie de détail (II) illustrant la première partie du mouvement d'empilement du mode de réalisation dé la figure 1, correspondant à la translation d'approche, les figures 3 et 4 montrant la suite et fin du verrouillage,
- la figure 5 montre une variante de réalisation, dans l'état empilé de deux casseroles, suivant une vue comparable à celle de la figure 1,
- la figure 6 montre encore une variante de réalisation,
- la figure 7 est une coupe suivant VII-VII de la fig. 6,
- et la figure 8 montre deux articles empilés, chacun avec la poignée de la fig.6.

Ci-après les poignées sont montrées fixées aux articles culinaires. Elles pourraient en être disjointes.

Figure 1, on voit donc deux articles culinaires 101, 103 empilés l'un sur l'autre, suivant une pile dressée.

Il s'agit en l'espèce de deux casseroles de tailles non consécutives appartenant à un même lot de casseroles susceptibles de s'emboîter au moins partiellement, par leur calotte.

Chaque article culinaire 101, 103 comprend une calotte respectivement 113, 115 et une poignée de manutention 117, 119.

Chaque poignée se présente ici comme un manche allongé fixé à une extrémité, par une embase 120,122 pare-flamme, à la paroi latérale de la calotte, en partie haute, à proximité du rebord périphérique supérieur 113a, 115a qui limite chaque calotte autour de son ouverture supérieure 121, 123.

Chaque poignée 117, 119, thermiquement isolée, permet une prise à main nue et à pleine main de l'article culinaire concerné.

Par ailleurs, chaque poignée 117, 119 comprend,̅ un pion 125, 129 et un logement coopérant 131, 132.

Dans la réalisation de la figure 1, les pions saillants 125, 129 et les logements correspondants 131, 132 sont intégralement formés à l'endroit de la poignée correspondante.

Pour empiler de manière stable l'article supérieur 101 sur l'article inférieur 103 dont le diamètre de calotte est plus important, le pion 129 est disposé à l'intérieur du logement 131.

La pile est stable du fait de cet rengagement, sans qu'il y ait ici d'autres contacts entre les articles 101 et 103 que celui entre la surface latérale 129a du pion 129 et celle 131a qui l'entoure ici étroitement, du logement (voir fig.2, ainsi que zones de contact entre excroissances et parois d'appui, ci-après). En particulier les calottes ne sont pas en contact entre elles.

Figure 1, en supposant le fond 113b de la calotte disposé à peu près horizontalement, les pions et logements de la pile formée se dressent tous suivant un axe vertical ou proche de la verticale.

L'écart horizontal entre les axes d'élévation du pion 125 et du logement 131 correspondant est faible.

Chaque pion 125, 129 se dresse sur la partie supérieure de la poignée, les logements étant formés à l'opposé, en partie inférieure.

Les deux articles tiennent donc l'un dans l'autre en porte-à-faux, ici donc uniquement via l'engagement du pion 129 dans le logement 131. Cet engagement est ici conique, les pions et les logements étant chacun tronconique.

On aurait pu intervertir pion et logement, de sorte que le pion se dresserait sous la paroi inférieure de la poignée supérieure, tandis que le logement serait creusé dans la face supérieure de la poignée inférieure, ceci pour indiquer que ce qui suit peut aussi bien s'appliquer en inversant pion et logement, de même pour excroissance et poignée d'appui.

Figures 1 à 4 et de préférence, sur le pion 129 apparaît une excroissance de verrouillage 162 et, vers le logement coopérant 131, apparaît une zone de réception 164, ici une paroi d'appui.

L'excroissance 162 est adaptée à être reçue contre la zone de réception/paroi d'appui 164 prévue sur l'article 101.

Les poignées étant identiques entre elles, le logement 132 de l'article sous-jacent 103 est quant à lui adapté à recevoir contre lui une autre excroissance de verrouillage prévue sur un autre article identique au précédent, mais a priori de taille de calotte différente.

Ces situations d'engagement relatif se présentent lors d'un mouvement d'empilement qui consistera ici notamment à laisser basculer l'article supérieur 101 dans le sens de la flèche 168, par rapport à l'article sous-jacent 103, jusqu'à blocage relatif entre ces articles, par appui entre l'excroissance de verrouillage et la paroi d'appui concernée.

La paroi d'appui aurait pu être à l'endroit du pion, en creux, l'excroissance étant alors formée à l'endroit du logement.

Ici, c'est l'inverse. La paroi d'appui 164 est formée légèrement en retrait du logement 131.

L'empilement des articles culinaires s'effectuent suivant une direction verticale ou sensiblement verticale (on peut donc imaginer une approche de biais inclinée par rapport à la verticale).

Transversalement à cette direction d'engagement, et en particulier ici sensiblement horizontalement, un jeu limité existe entre le pion d'un article et le logement de l'autre article, lorsque le premier s'engage dans le second, ici par translation suivant la flèche 168.

Après cela, le pion 129 se bloque dans le logement 131, lorsque le basculement s'opère, flèche 170 fig.4.

On parvient alors à un coincement relatif entre l'excroissance 162 et la paroi d'appui contre laquelle elle s'est engagée.

La translation, ici donc opérée préalablement au basculement, amène au rapprochement entre cette excroissance et sa paroi d'appui correspondante 164.

L'excroissance, telle que 162, est formée en un emplacement le long d'une paroi latérale, dressée, 129a du pion, ici à l'avant de ce pion, du côté proche de la calotte, près de la base inférieure élargie du pion.

La paroi d'appui correspondante, telle que 164, est formée à l'endroit d'un orifice 178 transversal à la direction suivant laquelle se dresse le logement 131, figs.3 et 4.

Cet orifice 178 et le logement communiquent, notamment pour permettre d'engager un moyen de fixation de la poignée sur la calotte, telle qu'une vis schématisée en 180 fig.3.

En alternative, l'excroissance aurait pu être située à l'arrière, vers le haut du pion, le logement coopérant étant alors disposé en conséquence, à l'arrière, en haut du logement.

Figures 2 à 4, la paroi d'appui 164 est formée en bordure du logement concerné, ici en limite de l'intersection avec l'orifice transversal 178.

Ainsi, lors de la translation, l'excroissance 162 va être amenée, au moins essentiellement, jusqu'en face de cet orifice transversal (voir figures 3 et 4), ici au-dessus de la paroi 164, et y demeurera, lors du basculement de verrouillage, en engageant alors la paroi d'appui située sur son chemin.

On remarque figure 1 que le pion tel que 125 et le logement tel que 131 d'une même poignée, telle que 101, sont situés plus : près de la première extrémité 117a où la poignée est reliée à la calotte, que de la seconde extrémité 117b opposée de cette poignée.

Ceci, conjugué au surpoids côté calotte et à la disposition des excroissance et logement coopérants favorise le basculement « naturel » recherché, générateur du verrouillage à obtenir.

On notera encore que chaque excroissance, telle que 162, se présente ici comme un bouton arrondi, un tronc de cône à base ovale, allongé dans le sens de la hauteur.

Cette excroissance comprend une zone inférieure de paroi de biais 162a, extérieurement convexe vers le bas.

De façon complémentaire, la paroi d'appui correspondante, telle 164, est définie par une zone de paroi de biais, concave vers le haut.

### Figure 4, au moins deux zones de contact 162a-164 et

182b sont définies, du fait de l'engagement du pion dans le logement et de celui de l'excroissance 162 contre la paroi d'appui 164.

La première zone de contact 162a-164 est donc située vers la base de l'excroissance, à proximité de l'ouverture du logement 131 par laquelle le pion a été engagé là, du côté le plus proche de la calotte où sont fixées les poignées.

L'autre zone de contact 182b (ici en haut et à l'arrière) est donc située à l'opposé, vers le fond 131b du logement 131, et donc vers le sommet 129b du pion 129.

En considérant donc l'avant (AV) du côté de la calotte et l'arrière (AR) à l'opposé, ladite première zone de contact périphérique est située à l'avant en bas du logement et du pion, tandis que l'autre zone opposée 182b de contact est située à l'arrière, en haut.

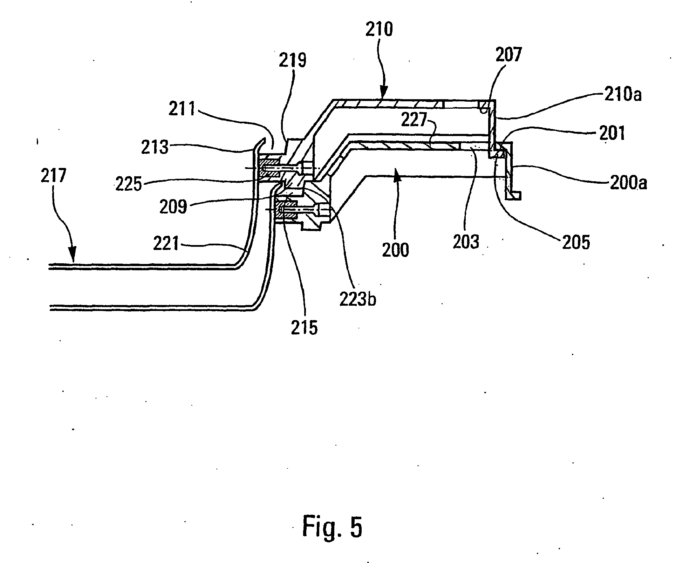

Dans la variante de la figure 5, la paroi d'appui 201 est située derrière une ouverture 203 ménagée dans la poignée 200 correspondante.

Cette ouverture est adaptée à laisser passer l'excroissance 205 à travers elle, ce passage intervenant pendant le mouvement d'empilement.

La paroi d'appui 207 et l'excroissance 205 sont situées à distance du pion 209 et du logement 211, plus près de l'extrémité libre 210a de la poignée 210.

Sur cette figure, le pion 209 dressé vers le bas sensiblement verticalement en partie inférieure de la poignée 210, près de son extrémité avant de contact avec l'embase 213, s'engage dans un logement 215 ménagé en partie supérieure de la poignée 200 de l'article inférieur.

Plus précisément, chaque logement est ici défini en partie par une paroi de la poignée et en partie par une zone de la calotte du même article.

Ainsi, pour l'article supérieur 217 par exemple, le logement 211 est-il limité, en partie dorsale, par une paroi frontale 219 dressée en partie avant de la poignée 210, tandis qu'en partie frontale (avant), ce logement est limité par la partie supérieure de la paroi latérale de la calotte 221 toujours terminée par un rebord extérieur.

A l'endroit du pion de retenue 209, on remarque d'ailleurs qu'autant la retenue arrière est réalisée dans l'environnement de la zone de contact arrière 223b entre une partie de la surface latérale arrière du pion proche de son sommet qui vient donc au contact d'une partie arrière basse située près du fond, à l'arrière, du logement 215, autant l'appui avant dans la zone 225 proche de la base du pion et située à l'avant de celui-ci, s'effectue par contact avec l'extrémité du rebord de la calotte.

On comprend qu'en l'absence de rebord ou dans une variante de réalisation, l'appui avant 225 pourrait s'effectuer plus bas au contact de la paroi de la calotte concernée.

Une fois encore, on remarquera que, lors de l'engagement du pion dans le logement 215, il y a eu un léger basculement vers l'avant (côté calotte) de l'article supérieur.

Ce basculement a ici été précédé par le passage de l'excroissance 205 à travers l'ouverture 203.

Le basculement a amené l'engagement du pion 209 dans son logement, avec appui entre l'excroissance 205 et la paroi d'appui correspondante, 201.

Le pion et le logement sont situés plus près de la calotte que ne le sont l'excroissance et l'ouverture de chaque poignée, telle que 210.

L'excroissance présente ici comme un crochet saillant en surface de la poignée considérée.

Chaque ouverture, telle que 203, est formée dans la paroi de dessus 227 de la poignée considérée.

L'excroissance, telle que 205, est alors en saillie en-dessous de la poignée.

Le crochet 205 est formé à l'extrémité 210a de la poignée, en bas, à la manière d'un rebord extérieur, sensiblement horizontal.

Chaque ouverture, telle que 203, est légèrement en retrait de cette extrémité (ici 200a), de manière à ce que la paroi 201 soit située entre elle et cette extrémité 200a.

On aurait pu former l'excroissance avec une saillie vers le haut et réaliser alors chaque ouverture dans la paroi de dessous des poignées.

Et à la place de casserole, on aurait bien sûr pu relier les poignées ici considérées à d'autres types d'articles, en particulier poêle(s) et/ou faitout(s).

On notera également qu'on aurait pu obtenir une qualité acceptable d'empilement sans pion, voire sans la conformation définissant chaque logement.

Ceci peut définir un domaine de protection propre, avec donc une poignée ou un ensemble de poignées présentant (chacune) comme moyen d'emboîtement et de maintien relatif entre poignées, uniquement les excroissance et ouverture (avec paroi d'appui) présentées en liaison avec cette figure 5.

Cette possibilité est illustrée figures 6 à 8 où on peut considérer qu'on dispose, sur chaque poignée 301 ou 303, soit d'un ensemble pion-logement remplissant les fonctions précitées, mais avec un engagement horizontal ou proche de l'horizontal, soit d'un ensemble excroissance-ouverture/ zone de réception assurant l'engagement, dans chaque cas, entre deux poignées adjacentes entre elles.

C'est la seconde hypothèse qui est considérée ci-après, pour faciliter la description. Mais on pourrait lire « pion » à la place « d'excroissance » et « logement » à la place « d'ouverture (avec sa zone de réception, en vide ou en plein)».

Sous la poignée inférieure 303 est ménagée une ouverture 305 présentant un rebord intérieur, ici arrière, définissant la paroi d'appui 307 et dessinant une sorte de crochet en creux.

En face supérieure de cette poigné, on trouve un crochet 309 définissant l'excroissance de verrouillage que l'on recherche et dont la forme est adaptée à s'engager relativement étroitement, mais avec un certain jeu, dans l'ouverture en crochet 311 image de l'ouverture 305, en face inférieure de la poignée supérieure 301.

En face supérieure de cette poignée se dresse le crochet 315 identique au crochet 309.

Les calottes des articles illustrés sont de tailles différentes. Par contre, et comme dans les versions précédentes, les poignées 301, 303 sont identiques entre elles.

Figure 7, on voit que, latéralement, l'ouverture 311 est ouverte, pour autoriser un engagement, ou un dégagement, du crochet considéré suivant un mouvement pivotant, dans un plan horizontal proche de l'horizontal, voir flèche 317.

Ici, une paroi dressée 319 définit un fond latéral à l'ouverture 311, limitant l'ouverture du pivotement, dans un sens.

En alternative, on aurait pu prévoir une telle paroi latérale de fond d'un côté du crochet 315.

Tant devant le crochet 315, en face supérieure de la poignée, que devant l'ouverture 311, en face inférieure, la paroi de la poignée s'incline de biais (face inclinée frontale 320a ou dorsale 320b).

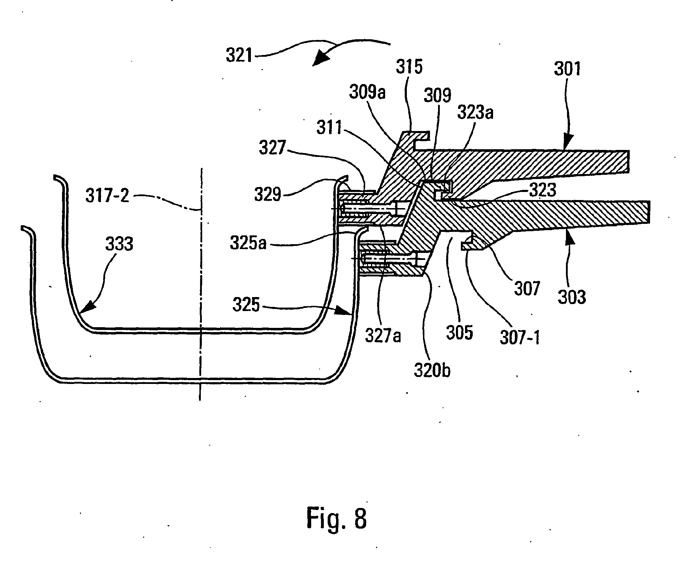

En position définitive d'empilement des poignées, on prévoit de préférence un léger basculement de la poignée supérieure 301 par rapport à la poignée inférieure 303, comme montré avec la flèche 321 fig.8 où ce basculement n'a pas encore eu lieu. Il intervient lorsque l'opérateur lâche la poignée supérieure 301.

Il y a alors, a priori, appui à l'endroit du creux formant l'ouverture ou logement 311 en crochet (paroi 323a).Un autre appui existe. Il peut être à l'endroit de la face extérieure supérieure 309a du crochet 309, à l'endroit de la face frontale inclinée 311, voire du rebord 325a de la calotte inférieure 325 (contact avec la face inférieure 327a de l'embout 327 de liaison entre la poignée supérieure et la calotte correspondante, ou avec la face inférieure de l'embase 329 adjacente à cet embout et qui l'enserre).

Sur la face 320b débouche l'orifice transversal 329 d'engagement du moyen de fixation (vis 331) de la poignée à la calotte 333.

Figs.6 ou 8, on remarquera que chaque poignée est en quelque sorte pourvue de deux crochets, l'un supérieur, tel que 315, l'autre inférieur, tel que 323, formé de façon immédiatement adjacente à (juste derrière) l'ouverture en crochet 311.

Sur cette variante des figs.6 à 8, en requalifiant « excroissance » : « pion » et « ouverture (avec sa zone de réception)» : « logement », on aurait donc un empilement stabilisé d'articles par interengagement de poignées, un pion de l'une d'elles étant pour cela reçu dans le logement complémentaire d'une autre, par pivotement latéral ou sensiblement horizontal desdites poignées entre elles.

On pourra également utilement considérer :
- qu'aux figures 1-4, on combine des pions pourvus d'excroissances (donc mâles / mâles) avec des logements pourvus d'orifices (178) (donc femelles / femelles),
- tandis qu'aux figures 6-8, on combine, à l'inverse, des pions pourvus d'orifices (donc mâles. / femelles) avec des logements pourvus d'excroissances (donc femelles / mâles).

Jusqu'au moment où le pion est sensiblement de même volume que son orifice ..... pour se retrouver avec "un crochet".

En d'autres termes le crochet 315 pourrait être considéré comme un pion (315-1, fig.6) ayant une forme telle (ici avec le rebord 315-2 définissant la zone de crochetage) qu'il est pourvu d'un logement ou orifice 316, tandis que le logement complémentaire 311 (ou 305 fig.8) est pourvu de ce que l'on pourrait considérer être une excroissance (rebord 323-1 ou 307-1 définissant la zone de crochetage correspondante).

Concernant le logement 311, on peut également considérer qu'il est pourvu d'un dit « orifice transversal » en 311-1 fig.6, dès lors qu'il se prolonge ainsi, transversalement (ici sensiblement horizontalement) à l'axe dressé 311-2 suivant lequel il s'élève, ici sensiblement verticalement, à l'image du « pion » 315-1.

Dans le cas des figures 6 à 8, le basculement entre les articles à empiler s'opère donc, au moins en partie, dans un plan sensiblement horizontal (317-1 et flèche 317, fig.7) suivant lequel les poignées des articles à positionner pivotent l'une par rapport à l'autre autour d'un axe vertical (317-2, fig.8), ce (premier) basculement pouvant, si on l'a souhaité, être complété par un second correspondant à la flèche 321, fig.8.

Dans le cas de ces figures 6 à 8, il pourra donc y avoir engagement de l'excroissance (telle 315-2,323-1) dans son orifice (telle 311-1,316), sans appui.

Dans ce cas, la zone de réception 311-1,316 sera donc un volume « vide » sans paroi d'appui, à la différence de la solution des figures 1-4 en particulier.

## Revendications

1. Ensemble d'au moins deux poignées pour une préhension à main nue d'au moins deux articles culinaires de cuisson, pour cuisinière et plaque de cuisson, lesdits articles comprenant des calottes de réception d'aliments empilables l'une avec l'autre suivant un mouvement d'empilement, chaque poignée présentant au moins un pion (125, 129, 209) et/ou au moins un logement (131, 132, 215) étant défini, au moins en partie, par une zone en creux de ladite poignée, ceci pour le maintien en pile desdites calottes superposées, chaque logement et/ou pion étant pour cela adapté respectivement, à recevoir un autre pion et/ou à être reçu dans un autre logement complémentaire(s) à celui/ceux précité(s) et prévu(s) sur la poignée de l'autre article,
et une excroissance de verrouillage (162, 205, 315) et une zone de réception (207,323,311-1,316,178) étant adaptées respectivement :
- à être engagée avec une autre zone de réception prévue sur la poignée destinée à l'autre article,
- et à recevoir l'engagement d'une autre excroissance de verrouillage (309) prévue sur cette poignée destinée à l'autre article,
**caractérisé en ce que**, pour un empilement des poignées, chaque logement et pion s'étend suivant une direction qui se dresse vers le haut ou vers le bas.

2. Ensemble de poignées selon la revendication 1,
**caractérisée en ce que** ledit engagement de l'excroissance de verrouillage (162, 205, 315...) dans la zone de réception correspondante (207, 323...) s'opère lors dudit mouvement d'empilement qui comprend un basculement, dans un sens, d'une poignée par rapport à l'autre.

3. Ensemble de poignées selon la revendication 1 ou 2, **caractérisée en ce que** l'une entre l'excroissance (162,315-2) et la zone de réception (164,311-1) est formée à l'endroit ou à proximité immédiate du logement (131,311), en retrait ou en saillie par rapport à lui.

4. Ensemble de poignées selon la revendication 2 ou 3 lorsqu'elle se rattache à la revendication 2, **caractérisé en que**, préalablement au basculement, le mouvement d'empilement comprend une translation, laquelle mène au rapprochement entre l'excroissance (162, 205, 309) et la zone de réception correspondante (164, 201, 323a), avant qu'elles se bloquent l'une avec l'autre, lors dudit basculement.

5. Ensemble de poignées selon l'une quelconque des revendications précédentes, **caractérisé en ce que** :
- le mouvement d'engagement s'effectue dans un plan vertical ou sensiblement vertical,
- le pion (125, 129,315-1) et le logement (131,311) sont dressés vis-à-vis de la poignée correspondante,
- l'excroissance (162,315-2) est formée en un emplacement le long d'une paroi dressée dudit pion (129...),
- la zone de réception correspondante (164,307) est formée à l'endroit d'un orifice (178,311-1) transversal à la direction suivant lequel se dresse le pion ou le logement (131,311) et avec lequel ce logement communique.

6. Ensemble de poignées selon la revendication 5,
**caractérisée en ce que** ledit orifice transversal (178) reçoit une vis (180) de fixation de la poignée à la calotte.

7. Ensemble de poignées selon la revendication 5 ou 6, rattachée à la revendication 2, **caractérisé en ce que**:
- lors du mouvement d'empilement, l'excroissance (162) parvient au moins essentiellement jusqu'en face de l'orifice transversal correspondant (178) et y demeure, à l'issue du basculement,
- et/ou la zone de réception (164) est formée en bordure du logement (131) où celui-ci communique avec ledit orifice transversal.

8. Ensemble de poignées selon l'une quelconque des revendications précédentes, **caractérisé en ce que** la poignée est reliable/reliée à la calotte à une première extrémité (117a), et le pion et le logement d'une même poignée sont situés plus près de cette première extrémité que de la seconde extrémité (117b, 200a, 210a) opposée de la poignée.

9. Ensemble de poignées selon l'une quelconque des revendications précédentes, **caractérisé en ce que** :
- l'excroissance comprend une zone inférieure de paroi de biais (162a), extérieurement convexe vers le bas, et
- la zone de réception correspondante (164) présente une zone de paroi de biais, concave vers le haut et adaptée à recevoir étroitement ladite zone inférieure (162a) de paroi de l'article considéré.

10. Ensemble de poignées selon la revendication 1,
**caractérisé en ce que** la zone de réception (201, 307,311-1,316) est située derrière une ouverture (203, 305) ménagée dans la poignée correspondante, cette ouverture étant adaptée à laisser librement passer l'excroissance (205, 315,315-2,323-1) à travers elle.

11. Ensemble de poignées selon la revendication 10 rattachée à la revendication 2, **caractérisée en ce que** le mouvement d'empilement comprend le passage de l'excroissance (205, 315) à travers ladite ouverture correspondante (203, 305), avec le basculement, lequel amène l'engagement du pion (209) dans le logement (215) correspondant et celui de l'excroissance avec la zone de réception correspondante.

12. Ensemble de poignées selon la revendication 10 ou 11, **caractérisé en ce que** l'/chaque excroissance (315,315-1,315-2,205) se présente comme un crochet saillant en surface de la poignée.

13. Ensemble de poignées selon l'une des revendications 10 à 12, **caractérisé en ce que** :
- l'ouverture (203) est formée dans une paroi de dessus (227) ou de dessous de cette poignée,
- et l'excroissance se présente comme un crochet en saillie au-dessus (205) ou en-dessous de ladite poignée.

14. Ensemble d'au moins deux articles culinaires de cuisson, pour cuisinière et plaque de cuisson, comprenant un premier tel article empilable avec un autre article culinaire suivant un mouvement d'empilement, chaque article comprenant une calotte (113, 221, 333) pour y recevoir des aliments et au moins une poignée (117, 119, 200, 210, 301, 303) selon l'une quelconque des revendications précédentes, ceci pour le maintien en pile desdits article superposés, ledit mouvement d'empilement comprenant le basculement du premier article culinaire par rapport à l'autre disposé en-dessous, et/ou l'engagement entre l'excroissance de verrouillage (162, 205, 309) et la zone de réception (164, 201, 323a) de ces articles, alors empilés l'un sur l'autre, y compris leurs poignées, ces excroissance et zone de réception se développant latéralement vis-à-vis des logement et pion qui les portent.

15. Ensemble d'articles selon la revendication 14, où un pion d'un dit article de la pile et un logement d'un autre article sont engagés l'un dans l'autre et l'excroissance de verrouillage (162, 205, 309) de l'un des articles engage la zone de réception correspondante (164, 201, 323a) dudit autre article, de sorte que les poignées (117, 119, 200, 210, 301, 303) sont alors superposées verticalement.

16. Ensemble d'au moins deux articles culinaires de cuisson, pour cuisinière et plaque de cuisson, comprenant un premier tel article empilable avec un autre article culinaire suivant un mouvement d'empilement, chaque article comprenant une calotte (113, 221, 333) pour y recevoir des aliments et au moins une poignée (117, 119, 200, 210, 301, 303), ceci agencé de façon à inclure un ensemble selon l'une quelconque des revendications 1 à 13, pour le maintien en pile desdits articles superposés.

## Claims

1. Set of at least two handles for gripping at least two cooking culinary articles with the bare hand, for a cooker and hotplate, said articles comprising containers for receiving food, able to be stacked with each other in a stacking movement, each handle having at least one stud (125, 129, 209) and/or at least one housing (131, 132, 215) being defined, at least partly, by a hollow zone of said handle, for holding said superimposed containers in a stack, each housing and/or stud being for this purpose adapted respectively to receive another stud and/or to be received in another housing complementary to the aforesaid and provided on the handle of the other article,
and a locking protrusion (162, 205, 315) and a reception zone (207, 323, 311-1, 316, 178) being adapted respectively:
- to be engaged with another reception zone provided on the handle intended for the other article,
- and to receive the engagement of another locking protrusion (309) provided on this handle intended for the other article,
**characterised in that**, for stacking the handles, each housing and stud extends in a direction upwards or downwards.

2. Set of handles according to claim 1, **characterised in that** said engagement of the locking protrusion (162, 205, 315...) in the corresponding reception zone (207, 323...) takes place during said stacking movement, which comprises a tilting, in one direction, of one handle with respect to the other.

3. Set of handles according to claim 1 or 2, **characterised in that** one from among the protrusion (162, 315-2) and the reception zone (164, 311-1) is formed at or in the immediate vicinity of the housing (131, 311), recessed or projecting with respect to it.

4. Set of handles according to claim 2 or 3 when it relates to claim 2, **characterised in that**, prior to the tilting, the stacking movement comprises a translation, which leads to the protrusion (162, 205, 309) and the corresponding reception zone (164, 201, 323a) being brought closer together, before they are locked one on the other, during said tilting.

5. Set of handles according to any one of the preceding claims, **characterised in that**:
- the engagement movement takes place in a vertical or substantially vertical plane,
- the stud (125, 129, 315-1) and the housing (131, 311) are set up vis-à-vis the corresponding handle,
- the protrusion (162, 315-2) is formed in a location along an erect wall of said stud (129...),
- the corresponding reception zone (164, 307) is formed at an orifice (178, 311-1) transverse to the direction along which the stud or the housing rises (131, 311) and with which this housing communicates.

6. Set of handles according to claim 5, **characterised in that in that** said transverse orifice (178) receives a screw (180) for fixing the handle to the container.

7. Set of handles according to claim 5 or 6, relating to claim 2, **characterised in that**:
- during the stacking movement, the protrusion (162) arrives at least essentially opposite the corresponding transverse orifice (178) and remains there, at the end of the tilting,
- and/or the reception zone (164) is formed at the rim of the housing (131) where the latter communicates with said transverse orifice.

8. Set of handles according to any one of the preceding claims, **characterised in that** the handle is connectable/connected to the container at a first end (117a), and the stud and housing of one and the same handle are situated closer to this first end than to the opposite second end (117b, 200a, 210a) of the handle.

9. Set of handles according to any one of the preceding claims, **characterised in that**:
- the protrusion comprises a bottom slanting wall zone (162a), externally convex downwards, and
- the corresponding reception zone (164) has a slanting wall zone, concave upwards and adapted to closely receive said bottom wall zone (162a) of the article in question.

10. Set of handles according to claim 1, **characterised in that** the reception zone (201, 307, 311-1, 316) is situated behind an opening (203, 305) provided in the corresponding handle, this opening being adapted to allow the protrusion (205, 315, 315-2, 323-1) to pass through it.

11. Set of handles according to claim 10 relating to claim 2, **characterised in that** the stacking movement comprises the passage of the protrusion (205, 315) through said corresponding opening (203, 305), with the tilting, which causes the engagement of the stud (209) in the corresponding housing (215) and that of the protrusion with the corresponding reception zone.

12. Set of handles according to claim 10 or 11,
**characterised in that** the/each protrusion (315, 315-1, 315-2, 205) is in the form of a hook projecting on the surface of the handle.

13. Set of handles according to one of claims 10 to 12,
**characterised in that**:
- the opening (203) is formed in a top (227) or bottom wall of this handle,
- and the protrusion is in the form of a hook projecting on top of (205) or below said handle.

14. Set of at least two cooking culinary articles, for a cooker and hotplate, comprising a first such article able to be stacked with another article in a stacking movement, each article comprising a container (113, 221, 333) for receiving food therein and at least one handle (117, 119, 200, 210, 301, 303) according to any one of the preceding claims, for holding said superimposed articles in a stack, said stacking movement comprising the tilting of the first culinary article with respect to the other disposed below and/or the engagement between the locking protrusion (162, 205, 309) and the reception zone (164, 201, 323a) of the these articles, then stacked one on the other, including their handles, this protrusion and reception zone developing laterally vis-à-vis the housing and stud that carry them.

15. Set of articles according to claim 14, where a stud on said article in the stack and a housing in another article are engaged one in the other and the locking protrusion (162, 205, 309) on one of the articles engages the corresponding reception zone (164, 201, 323a) of said other article, so that the handles (117, 119, 200, 210, 301, 303) are then superimposed vertically.

16. Set of at least two cooking culinary articles, to be used on a cooker or a hotplate, comprising a first of said articles adapted to be stacked with another of said articles, in a stacking movement, each article comprising a container (113, 221, 333) for receiving food therein and at least one handle (117, 119, 200, 210, 301, 303), such a set being so arranged that it includes said set of at least two handles according to any one of the claims 1 to 13, for holding the superimposed articles in a stack.

## Patentansprüche

1. Garnitur aus wenigstens zwei Griffen für ein Ergreifen mittels bloßer Hand von wenigstens zwei Kochartikeln, für Herd und Kochplatte, wobei die Artikel Töpfe zur Aufnahme von Lebensmitteln umfassen, die in einer Stapelbewegung miteinander stapelbar sind, wobei jeder Griff zur Erhaltung des Stapels der übereinander angeordneten Töpfe, wenigstens einen Ansatz (125, 129, 209) und/oder wenigstens eine Aufnahme (131, 132, 215) aufweist, die wenigstens teilweise durch einen Hohlbereich des Griffes gebildet werden, wobei jede Aufnahme und/oder jeder Ansatz dafür jeweils so ausgelegt ist, dass diese/dieser einen weiteren Ansatz aufnehmen kann und/oder in eine weitere Aufnahme aufgenommen werden kann, die zu der/den vorgenannten komplementär und an dem Griff des anderen Artikels vorgesehen ist,
und einer Verriegelungs-Protuberanz (162, 205, 315) und einen Annahmebereich (207, 323, 311-1, 316, 178), die jeweils so ausgelegt sind, dass sie:
- mit einem anderen Annahmebereich in Eingriff gebracht werden können, der an dem Griff für einen anderen Artikel vorgesehen ist,
- und den Eingriff einer weiteren Verriegelungs-Protuberanz (309) annehmen, die an diesem, für den anderen Artikel bestimmten Griff vorgesehen ist,
**dadurch gekennzeichnet, dass** sich für eine Stapelung der Griffe jede Aufnahme und jeder Ansatz in eine Richtung erstreckt, die sich nach oben oder nach unten richtet.

2. Griffgarnitur nach Anspruch 1, **dadurch gekennzeichnet, dass** der Eingriff der Verriegelungs-Protuberanz (162, 205, 315 ...) in den korrespondierenden Annahmebereich (207, 323 ...) während der Stapelbewegung erfolgt, die eine Schwenkung eines Griffs in Bezug zu dem anderen in einer Richtung umfasst.

3. Griffgarnitur nach Anspruch 1 oder 2, **dadurch gekennzeichnet, dass** eine zwischen der Protuberanz (162, 315-2) und dem Annahmebereich (164, 311-1) an oder in unmittelbarer Nähe der Aufnahme (131, 311), zurückspringend oder vorspringend in Bezug zu dieser, ausgebildet ist.

4. Griffgarnitur nach Anspruch 2 oder 3, wenn sich dieser auf Anspruch 2 zurück bezieht, **dadurch gekennzeichnet, dass** vor der Schwenkung die Stapelbewegung eine Translation umfasst, welche für eine Annäherung zwischen der Protuberanz (162, 205, 309) und dem korrespondierenden Annahmebereich (164, 201, 323a) führt, bevor sich diese bei der Schwenkung gegenseitig blockieren.

5. Griffgarnitur nach einem der vorhergehenden Ansprüche, **dadurch gekennzeichnet, dass:**
- die Eingriffsbewegung in einer vertikalen oder im Wesentlichen vertikalen Ebene erfolgt,
- der Ansatz (125, 129, 315-1) und die Aufnahme (131, 311) gegenüber dem korrespondierenden Griff ausgerichtet sind,
- die Protuberanz (162, 315-2) in einem Raum entlang einer vom Ansatz (129 ...) gebildeten Wand geformt ist,
- der korrespondierende Annahmebereich (164, 307) an einer Öffnung (178, 311-1) quer zu der Richtung ausgebildet ist, in die der Ansatz oder die Aufnahme (131, 311) ausgerichtet ist und mit welcher diese Aufnahme kommuniziert.

6. Griffgarnitur nach Anspruch 5, **dadurch gekennzeichnet, dass** die Queröffnung (178) eine Schraube (180) zur Befestigung des Griffs an dem Topf aufnimmt.

7. Griffgarnitur nach Anspruch 5 oder 6, abhängig von Anspruch 2, **dadurch gekennzeichnet, dass:**
- bei der Stapelbewegung die Protuberanz (162) wenigstens im Wesentlichen bis zu einer Seite der korrespondierenden Queröffnung kommt und dort am Ende der Schwenkung verharrt,
- und/oder der Annahmebereich (164) aus einem Rand der Aufnahme (131) gebildet wird, wo dieser mit der Queröffnung kommuniziert.

8. Griffgarnitur nach einem der vorhergehenden Ansprüche, **dadurch gekennzeichnet, dass** der Griff mit einem ersten Ende (117a) mit dem Topf verbindbar/verbunden ist und der Ansatz und die Aufnahme desselben Griffs näher zu diesem ersten Ende als zu dem zweiten Ende (117b, 200a, 210a) gegenüber dem Griff angeordnet sind.

9. Griffgarnitur nach einem der vorhergehenden Ansprüche, **dadurch gekennzeichnet, dass:**
- die Protuberanz einen unteren Bereich aus einer schrägen Wand (162a) umfasst, die außen konvex nach unten verläuft, und
- der korrespondierende Annahmebereich (164) einen schrägen Wandbereich umfasst, der konkav nach oben verläuft und so ausgelegt ist, dass dieser dort den unteren Bereich (162a) der Wand des betreffenden Artikels aufnimmt.

10. Griffgarnitur nach Anspruch 1, **dadurch gekennzeichnet, dass** der Annahmebereich (201, 307, 311-1, 316) hinter einer Öffnung (203, 305) angeordnet ist, die in dem korrespondierenden Griff ausgebildet ist, wobei diese Öffnung so ausgelegt ist, dass diese die Protuberanz (205, 315, 315-2, 323-1) durch diese frei hindurch lässt.

11. Griffgarnitur nach Anspruch 10, abhängig von Anspruch 2, **dadurch gekennzeichnet, dass** die Stapelbewegung mit der Schwenkung den Durchgang der Protuberanz (205, 315) quer durch die korrespondierende Öffnung (203, 305) umfasst, die zum Eingriff des Ansatzes (209) in die korrespondierende Aufnahme (215) und der Protuberanz mit dem korrespondierenden Annahmebereich führt.

12. Griffgarnitur nach Anspruch 10 oder 11, **dadurch gekennzeichnet, dass** die/jede Protuberanz (315, 315-1, 315-2, 205) als ein Haken darstellt, der an der Oberfläche des Griffs vorsteht.

13. Griffgarnitur nach einem der Ansprüche 10 bis 12, **dadurch gekennzeichnet, dass**:
- die Öffnung (203) in einer Oberwand (227) oder Unterwand dieses Griffs ausgebildet ist,
- und sich die Protuberanz als nach unten vorspringender Haken (205) oder nach oben vorspringender Haken des Griffs darstellt.

14. Garnitur aus wenigstens zwei Kochartikeln, für Herd und Kochplatte, mit einem ersten solchen Artikel, der mit einem weiteren Kochartikel in einer Stapelbewegung stapelbar ist, wobei jeder Artikel einen Topf (113, 221, 333) zur Aufnahme von Lebensmitteln darin und wenigstens einen Griff (117, 119, 200, 210, 301, 303) nach einem der vorhergehenden Ansprüche aufweist, und zwar zur Beibehaltung eines Stapels der übereinander angeordneten Artikel, wobei die Stapelbewegung die Schwenkung des ersten Kochartikels in Bezug zu dem darunter angeordneten weiteren umfasst, und/oder einen Eingriff zwischen einer Verriegelungs-Protuberanz (162, 205, 309) und dem Annahmebereich (164, 201, 323a) dieser Artikel, wenn diese einschließlich ihrer Griffe übereinander gestapelt sind, wobei sich diese Protuberanz und dieser Annahmebereich seitlich gegenüber der Aufnahme und dem Ansatz, der diese trägt, erstrecken.

15. Artikelgarnitur nach Anspruch 14, bei welcher ein Ansatz eines besagten Artikels des Stapels und eine Aufnahme eines anderen Artikels miteinander in Eingriff gebracht sind und eine Verriegelungs-Protuberanz (162, 205, 309) eines der Artikel in den korrespondierenden Aufnahmebereich (164, 201, 323a) des anderen Artikels eingreift, derart, dass die Griffe (117, 119, 200, 210, 301, 303) dann vertikal übereinander angeordnet sind.

16. Garnitur von wenigstens zwei Kochartikeln, für Herd und Kochplatte, mit einem ersten solchen Artikel, der mit einem weiteren Kochartikel in einer Stapelbewegung stapelbar ist, wobei jeder Artikel einen Topf (113, 221, 333) umfasst, um darin Lebensmittel aufzunehmen, und wenigstens einem Griff (117, 119, 200, 210, 301, 303), die so angeordnet sind, dass diese eine Garnitur nach einem der Ansprüche 1 bis 13 zur Beibehaltung eines Stapels der übereinander angeordneten Artikel einschließen.
